# EUROPEAN PATENT APPLICATION

(11) **EP 1 916 613 A1**
(43) Date of publication of application: **30.04.2008**
(21) Application number: 07119398.1
(22) Date of filing: 26.10.2007
(51) Int. Cl.: G06F 21/00

(54) **Apparatus and method for downloading software in portable terminal**

(30) Priority: 27.10.2006 KR 20060105316
(71) Applicant: Samsung Electronics Co., Ltd., Suwon-si, Gyeonggi-Do (KR)
(72) Inventor: Cho, Jung-Min, Gangnam-gu Seoul (KR); Yang, Jin-Ki No. 201-1601, Doosan APT, Seoul (KR); Jang, Kyung-Ik No. 1003, Vellocity officetel, Suwon-si Gyeonggi-do (KR)
(74) Representative: Zimmer, Franz-Josef

(57) **Abstract**

A method for downloading software in a portable terminal is provided. The method includes decrypting authentication information of first binary data transmitted from a downloader ; comparing the version of the first binary data with the version of second binary data stored in the portable terminal by using the authentication information; and determining whether to permit download of the first binary data based on the comparison result obtained by comparing the version of the first binary data and the version of the second binary data.

## Description

The present invention relates generally to a method and apparatus for downloading software in a portable terminal, and in particular, to an apparatus and method for preventing software from being down-graded in a portable terminal.

Recent developments in industrial technologies have provide portable terminals with diverse functions other than a call communication function, and has brought about additional services combined with various economic business models, such as mobile banking. The portable terminals store personal credit information, asset information, and user identification information and/or an International Mobile Station Equipment Identity (IMEI) for identifying a terminal.

Conventionally, there have been an increasing number of cases of illegally using a portable terminal by changing the ID number of the portable terminal, e.g., the IMEI information, or terminal lock information through a security hole in software installed in the portable terminal. The IMEI information or lock information is different for each terminal and since the software should be available for data input and modification for the sake of convenience in repairing a terminal, it is difficult to fix the IMEI information or lock information with respect to hardware so that the IMEI information or lock information cannot be changed.

Diverse countermeasures have been suggested to prevent the IMEI information or lock information from being illegally changed. For example, there is a method of developing a new version of software free of security holes by complementing existing software having the security hole.

However, the method of protecting the IMEI information or lock information by eliminating the security holes of the software has a problem because it becomes useless when the conventional software with the security hole is installed in the portable terminal again. In other words, although software without a security hole is installed in a portable terminal, a malicious user can still change the IMEI information or lock information that needs to be protected by installing the conventional software with a security hole in the portable terminal.

The present invention has been designed to substantially solve at least the above problems and/or disadvantages and to provide at least the advantages below. Accordingly, the object of the present invention is to provide a method and apparatus for downloading software in a portable terminal.

This object is solved by the subject matter of the independent claims.

Preferred embodiments are defined in the dependent claims.

An aspect of the present invention is to provide a method and apparatus for preventing software from being down-graded in a portable terminal.

Another aspect of the present invention is to provide a method and apparatus for preventing software of a lower version than that of current software from being installed in a portable terminal based on software binary data version information and hash information.

According to one aspect of the present invention, a method for downloading software in a portable terminal is provided. The method includes decrypting authentication information of first binary data transmitted from a downloader; comparing the version of the first binary data with the version of second binary data stored in the portable terminal using the authentication information; and determining whether to permit download of the first binary data based on the comparison result obtained by comparing the version of the first binary data and the version of the second binary data.

According to another aspect of the present invention, an apparatus for downloading software in a portable terminal is provided. The apparatus includes an authentication information decryptor for decrypting authentication information of first binary data transmitted from a downloader; an information comparator for comparing a version of the first binary data with a version of second binary data existing in the portable terminal using the authentication information; and a controller for permitting download of the first binary data based on the comparison result.

The present invention will become more apparent from the following detailed description when taken in conjunction with the accompanying drawings in which:
FIG. 1 illustrates an operation procedure of a portable terminal and a down loader according to the present invention;
FIG. 2 illustrates a block diagram of a portable terminal according to the present invention;
FIG. 3 is a flowchart illustrating a process for downloading software in a portable terminal according to the present invention; and
FIG. 4 is a flowchart illustrating a process of a down loader for downloading software in a portable terminal according to the present invention.

Preferred embodiments of the present invention will be described herein below with reference to the accompanying drawings. In the following description, well-known functions or constructions are not described in detail since they would obscure the invention in unnecessary detail.

The present invention provides a method and apparatus for preventing software of a lower version than that of current software from being installed in a portable terminal based on software binary data version information and hash information.

Authentication information of software binary data is encrypted and decrypted using an RSA (Rivest Shamir Adelman) public key cryptosystem. According to the RSA public key cryptosystem, an encryption key and a decryption key are different from each other. The authentication information includes version information and hash information of the binary data. The version information shows how up-to-date the binary data are and may have a format unique to a production company. The hash information compresses binary data of a predetermined length into information of another predetermined length. The hash information may be used as authentication information and stored in predetermined binary data to thereby prevent the authentication information from being reused when other binary data are downloaded.

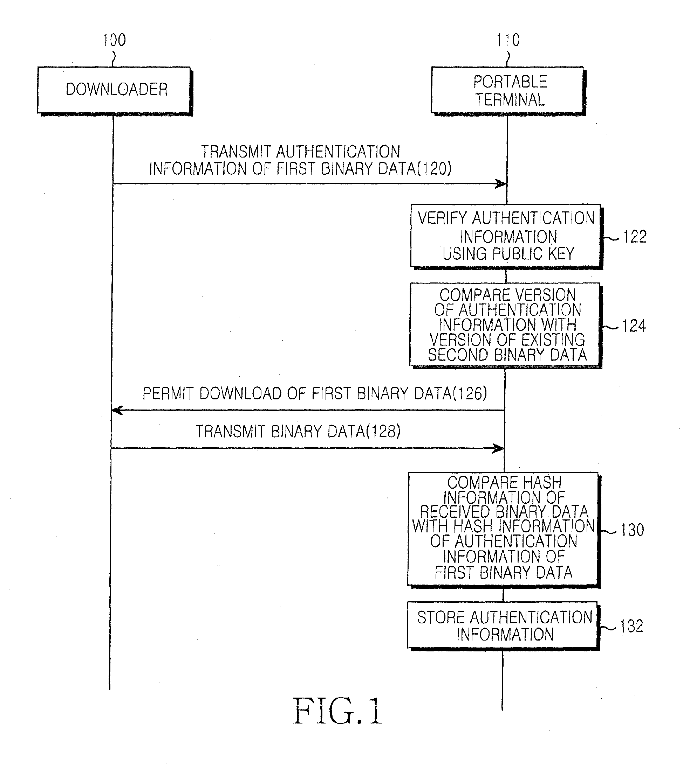

FIG. 1 illustrates an operation procedure of a portable terminal and a downloader according to the present invention.

In FIG. 1, a downloader 100 of a computer transmits authentication information of new binary data(hereinafter, first binary data) to a portable terminal 110 in step 120. The portable terminal 110 decrypts the authentication information using an RSA public key in step 122. From the decryption of the authentication information, it is possible to check whether the authentication information is authenticated by a corresponding production company of the first binary data. Subsequently, the portable terminal 110 searches binary data whose type is the same type as the type of the first binary data to be transmitted from the downloader 100 in the portable terminal 110 and compares the version of the searched binary data, or existing binary data, (hereinafter, second binary data) with the version included in the decrypted authentication information of the first binary data in step 124. The type of the binary data may be received from the downloader 100 when the portable terminal 110 receives the authentication information. The versions of the first and second binary data are compared in order to prevent the binary data of the portable terminal 110 from being down-graded.

When the version of the authentication information of the first binary data is a higher version or the same version of the existing second binary data, the portable terminal 110 then transmits a download permission message allowing the first binary data to the downloader 100 in step 126. The downloader 100 then receives the download permission message and transmits the first binary data to the portable terminal 110 in step 128. Thereafter, the portable terminal 110 receives the binary data and compares hash information of the received binary data with hash information of the authentication information of the first binary data to confirm whether the received binary data is the same as the first binary data. The comparison of the hash information is performed in other to check whether a malicious user has hacked the down loader 100 and transmitted binary data that are different from the first binary data that are scheduled to be transmitted, such as binary data that are not authenticated by the production company, or binary data of a lower version than existing second binary data.

When it turns out that the received binary data are the same as the first binary data, the portable terminal 110 stores the received binary data and the authentication information of the first binary data in step 132 and terminates the algorithm.

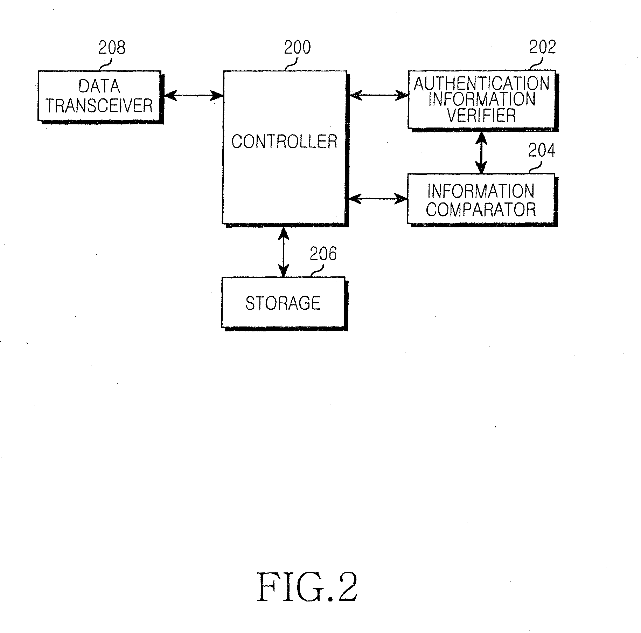

FIG. 2 illustrates a block diagram of a portable terminal according to the present invention. The portable terminal includes a controller 200, an authentication verifier 202, an information comparator 204, a storage 206, and a data transceiver 208.

In FIG. 2, the controller 200 controls and processes the general operation of speech communication and data communication. In particular, the controller 200 of the present invention receives authentication information and the binary data type from the data transceiver 208, transmits the authentication information to the authentication verifier 202, searches the storage 206 for authentication information of binary data having the binary type, and transmits the searched authentication information to the information comparator 204. Additionally, when the controller 200 receives a download permission/rejection signal from the information comparator 204, the controller 200 performs control to inform a corresponding down loader of whether the download is allowed or rejected through the data transceiver 208. When binary data are transmitted from the data transceiver 208, the controller 200 checks hash information of the binary data and then transmits the hash information to the information comparator 204. When a hash information agreement signal is transmitted from the information comparator 204, the controller 200 performs control to store the inputted binary data and the authentication information in the storage 206.

The authentication information verifier 202 decrypts the authentication information inputted from the controller 200 using an RSA public key to verify whether the authentication information is authenticated by a production company and outputs the result to the controller 200. In addition, when the authentication information is authenticated by the production company, the authentication information verifier 202 outputs the decrypted authentication information to the information comparator 204.

The information comparator 204 receives the decrypted authentication information from the authentication information verifier 202, and receives authentication information of existing binary data of the portable terminal from the controller 200. The information comparator 204 then compares the versions of the two authentication informations, determines whether download is allowable, and outputs a result signal to the controller 200. Also, when the information comparator 204 receives hash information on the binary data received from the controller 200, the information comparator 204 checks whether the hash information of the received binary data is the same as the hash information included in the authentication information transmitted from the authentication information verifier 202, and informs the controller 200 of the result.

The storage 206 may be a Read Only Memory (ROM), a Random Access Memory (RAM), or a flash ROM. The storage 206 stores micro codes of a program for the processing and control operation of the controller 200 and various reference data. Particularly, the storage 206 stores binary data and authentication information of binary data.

The data transceiver 208 processes signals transmitted/received to/from the downloader of a computer. Specifically, the data transceiver 208 of the present invention receives authentication information from the downloader and provides the authentication information to the controller 200, and transmits a signal informing whether binary data are permitted for download to the downloader under the control of the controller 200. The data transceiver 208 also receives binary data from the downloader and transmits them to the controller 200.

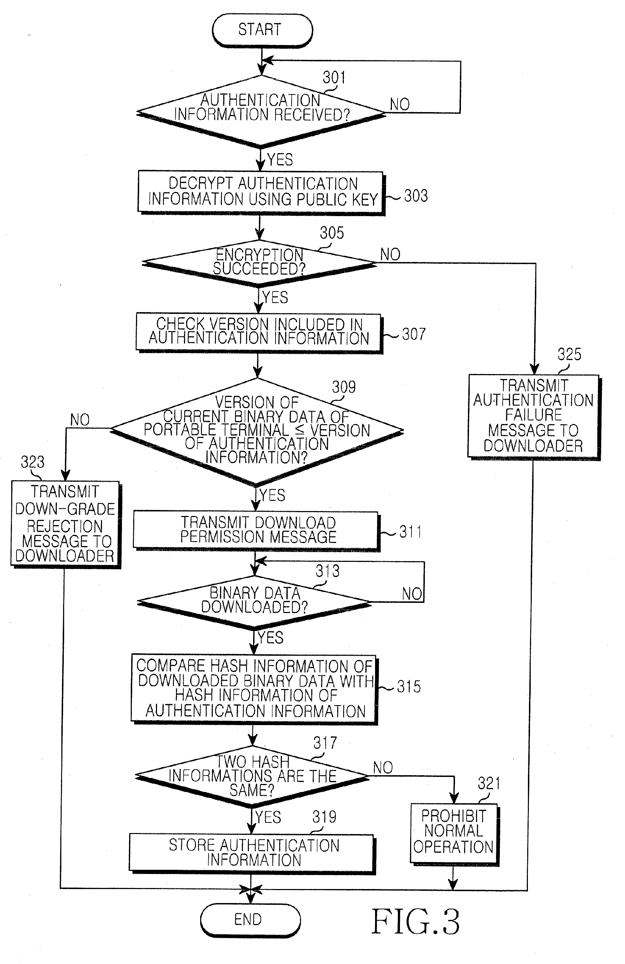

FIG. 3 is a flowchart illustrating a process for downloading software in a portable terminal according to the present invention.

In FIG. 3, a portable terminal checks whether authentication information of new binary data, i.e., first binary data, are received from a downloader in step 301. When the authentication information is received, the portable terminal decrypts the authentication information using an RSA public key in step 303. Here, it is possible to verify whether the first binary data are formally authenticated by a corresponding production company from the decryption of the authentication information using the RSA public key.

Subsequently, the portable terminal checks whether the authentication information is normally decrypted in step 305. When the authentication information is abnormally decrypted, the portable terminal determines that the first binary data are not authenticated by the production company, transmits an authentication failure message to the downloader in step 325, and terminates the algorithm.

Conversely, when the authentication information is normally decrypted, the portable terminal checks the version of the authentication information in step 307, searches itself for binary data of the same type as that of the first binary data which the down loader is about to transmit, and compares the version of searched binary data, i.e., second binary data, with the version of the authentication information. The type of the first binary data may be received along with the authentication information of the first binary data transmitted from the downloader.

When the version of the authentication information is a lower version than the version of the existing second binary data, the portable terminal transmits a down-grade rejection message to the down loader in step 323 and terminates the process.

When the version of the authentication information is a higher version or the same version as the existing second binary data, the portable terminal transmits a download permission message to the downloader in step 311. Herein, the portable terminal may delete the second binary data of a low version and the authentication information of the second binary data.

Subsequently, the portable terminal checks whether the binary data are received from the down loader in step 313. When the binary data are received, the portable terminal checks hash information of the received binary data and hash information of the authentication information in step 315, and checks whether the two hash informations are the same in step 317.

Here, when the two hash informations are not the same, the portable terminal determines that the first binary data to be transmitted are different from the received binary terminal and prohibits normal operation of the portable terminal performed using binary data in step 321. For example, the booting of the portable terminal is prohibited. Prohibition of normal operations of the portable terminal through the comparison between the two hash informations makes it possible to prevent a malicious user from hacking the downloader and changing the information of the portable terminal by transmitting binary data that are different from the first binary data that are originally to be transmitted, that is, by transmitting binary data that are not authenticated by the production company and have a lower version than the version of the existing binary data.

Meanwhile, when the two hash informations are the same and thus the binary data are the same as the first binary data to be transmitted, the portable terminal stores the authentication information in step 319 and terminates the process.

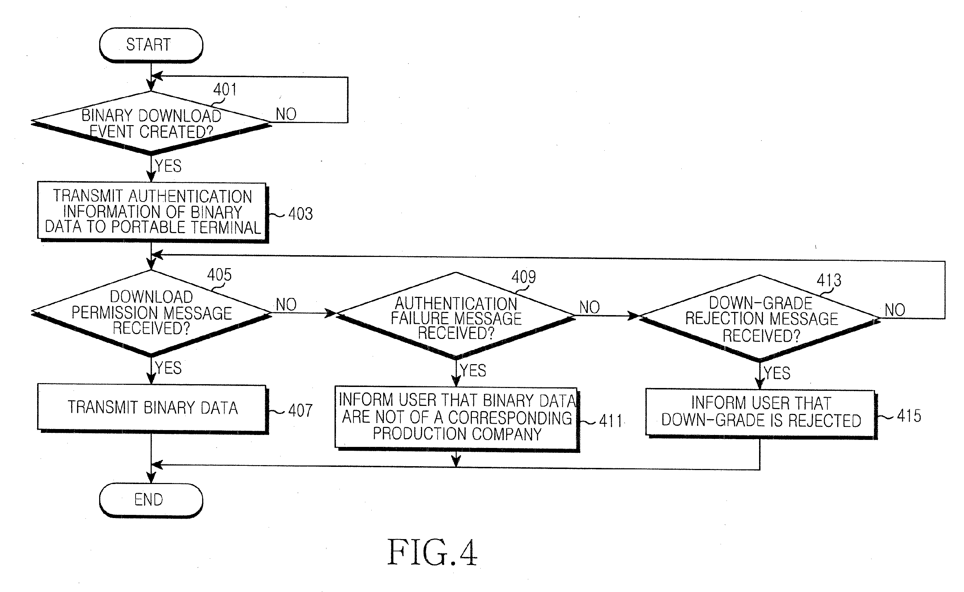

FIG. 4 is a flowchart illustrating a process of a down loader for downloading binary data in a portable terminal according to the present invention.

In FIG. 4, the down loader checks whether an event for downloading predetermined binary data into a portable terminal is created in step 401. In this case, when there is an event generated, the downloader transmits authentication information of the binary data to the portable terminal in step 403.

In step 405, the downloader checks whether it receives a download permission message from the portable terminal. When the downloader receives a download permission message, the down loader transmits the binary data in step 407 and terminates the process.

When the downloader does not receive a download permission message, it checks whether it receives an authentication failure message from the portable terminal in step 409. When the downloader receives an authentication failure message, it informs a user that the binary data are not binary data of the production company in step 411 and terminates the process.

When the downloader does not receive an authentication failure message in step 409, the downloader checks whether a down-grade rejection message is received from the portable terminal in step 413. When the downloader does not receive a down-grade rejection message, the downloader goes back to the step 405 and performs subsequent process. When the downloader receives a down-grade rejection message, the downloader informs the user that it is impossible to perform the down-grade in step 415 and terminates the process.

Although the down-grade of binary data is prohibited from using the version information of the binary data included in the authentication information in the above description, a country where the portable terminal is to be used may be determined by adding positioning information to the version information of binary data. Therefore, it is also possible to prevent portable terminals from being exported to a first country and then smuggled into a second country and marketed for resale, where the portable terminals include downloaded binary data specified for the first country.

As described above, when binary data of software are downloaded in a portable terminal, the present invention can prevent binary data of a portable terminal into binary data of a lower version having a security hole to thereby protect important data in the portable terminal from being illegally hacked and leaked by using version information and hash information.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the present invention has been described with respect to certain preferred embodiments, it will be apparent to those skilled in the art that various changes and modifications may be made without departing from the scope of the invention as defined in the following claims.

## Claims

1. A method for downloading software in a portable terminal, the method comprising:
decrypting authentication information of first binary data transmitted from a downloader;
comparing a version of the first binary data with a version of second binary data stored in the portable terminal by using the authentication information; and
determining whether to permit download of the first binary data based on the comparison result obtained by comparing the version of the first binary data and the version of the second binary data.

2. The method of claim 1, wherein the authentication information includes at least one of binary data version information, hash information, and positioning information.

3. The method of claim 1 or 2, wherein the authentication information is encrypted/decrypted using an RSA public key cryptosystem.

4. The method of one of claims 1 to 3, wherein determining whether to permit download of the first binary data comprises:
transmitting a download permission message to the downloader to transmit the first binary data to be downloaded, when the version of the first binary data is a higher version or the same version of the existing second binary data.

5. The method of claim 4, wherein determining whether to permit download of the first binary data further comprises:
informing the downloader not to transmit the first binary data, when the version of the first binary data is lower than the version of the existing second binary data.

6. The method of one of claims 1 to 5, further comprising:
receiving binary data from the downloader when the download of the first binary data is permitted; and
determining whether the received binary data are the same as the first binary data based on the authentication information.

7. The method of claim 6, wherein whether the received binary data are the same as the first binary data is determined by comparing the authentication information of the first binary data and authentication information of the received binary data.

8. The method of claim 6 or 7, further comprising:
prohibiting normal operation of the portable terminal, when the received binary data are not the same as the first binary data.

9. An apparatus for downloading software in a portable terminal, the apparatus comprising:
an authentication information decryptor for decrypting authentication information of first binary data transmitted from a downloader;
an information comparator for comparing a version of the first binary data and a version of second binary data existing in the portable terminal by using the authentication information; and
a controller for permitting download of the first binary data based on the comparison result.

10. The apparatus of claim 9, wherein the authentication information includes at least one of binary data version information, hash information and positioning information.

11. The apparatus of claim 9 or 10, wherein the authentication information is encrypted/decrypted using an RSA public key cryptosystem.

12. The apparatus of one of claims 9 to 11, wherein the controller informs the downloader not to transmit the first binary data, when the version of the first binary data is lower than the version of the existing second binary data.

13. The apparatus of one of claims 9 to 12, wherein the controller transmits a download permission message to the downloader to transmit the first binary data to be downloaded, when the version of the first binary data is a higher version or the same version of the existing second binary data.

14. The apparatus of one of claims 9 to 13, wherein the information comparator determines whether the binary data transmitted from the downloader are the same as the first binary data based on the authentication information, after the download of the first binary data is permitted.

15. The apparatus of claim 14, wherein whether the received binary data are the same as the first binary data is determined by comparing the authentication information of the first binary data and authentication information of the received binary data.

16. The apparatus of claim 14 or 15, wherein the controller prohibits normal operation of the portable terminal, when the received binary data are not the same as the first binary data.

17. A computer-readable recording medium having recorded thereon a program for downloading software in a portable terminal comprising:
a first code segment, for decrypting authentication information of first binary data transmitted from a downloader;
a second code segment, for comparing a version of the first binary data with a version of second binary data stored in the portable terminal by using the authentication information; and
a third code segment, for determining whether to permit download of the first binary data based on the comparison result obtained by comparing the version of the first binary data and the version of the second binary data.
